# EUROPEAN PATENT APPLICATION

(11) **EP 3 825 185 A1**
(43) Date of publication of application: **26.05.2021**
(21) Application number: 19837002.5
(22) Date of filing: 12.07.2019
(51) Int. Cl.: B60R 13/04

(54) **TRUNK COVER ASSEMBLY FOR VEHICLE, AND VEHICLE**

(30) Priority: 19.07.2018 CN 201810799270
(71) Applicant: PSA AUTOMOBILES SA, Shanghai 200051 (CN)
(72) Inventor: WANG, Liting, Shanghai 200233 (CN); XU, Chunliang, Shanghai 200233 (CN); WANG, Hongri, Shanghai 200233 (CN); JIANG, Huanjun, Shanghai 200233 (CN); YIN, Junlong, Shanghai 200233 (CN)
(86) International application number: PCT/CN2019/095777
(87) International publication number: WO 2020/015585

(57) **Abstract**

Disclosed is a trunk lid assembly for a vehicle and a vehicle. The trunk lid assembly for the vehicle includes a trunk lid (10, 20) and a trunk trim (40), wherein the trunk trim (40) is installed at the lower end of the trunk lid (10, 20) both in a direction toward the front of the vehicle body and in a height direction of the vehicle body. The trunk lid assembly may effectively improve the gap between the trunk trim and the trunk outer panel in the height direction of the vehicle body, thereby enhancing the strength of the trunk lid assembly and improving the surface quality of the trunk lid assembly.

## Description

### CROSS-REFERENCE TO RELATED APPLICATION

The present application claims priority to Chinese Application No. 2018107992701 filed on July 19, 2018, entitled "Trunk Lid Assembly for Vehicle and Vehicle".

### FIELD OF TECHNOLOGY

The present application relates to the technical field of vehicle parts, and in particular, to a trunk lid assembly for a vehicle and a vehicle.

### BACKGROUND

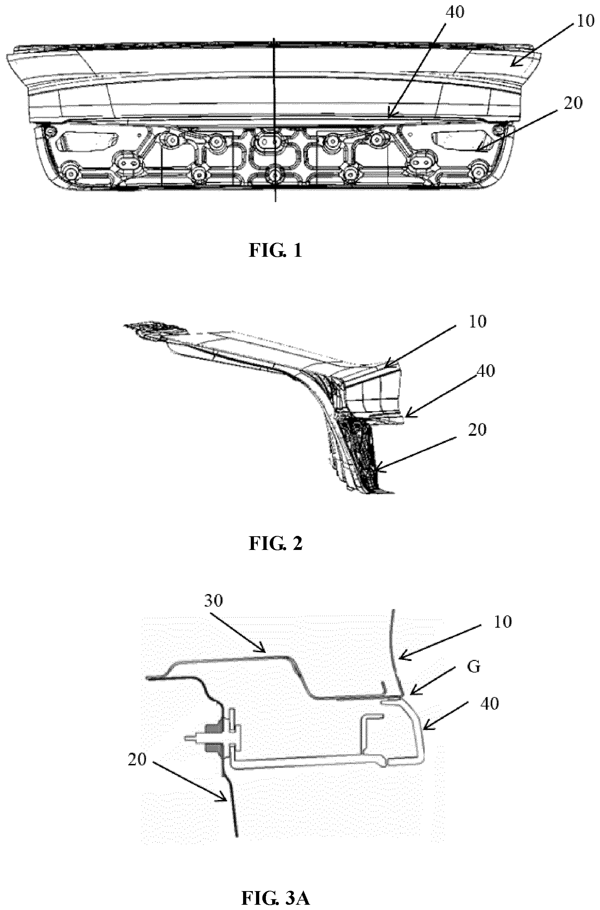

Generally, a trunk trim is fixedly installed at the lower end of the trunk lid in a direction toward the front of the vehicle, so the trunk trim only contacts and abuts against the trunk cover in the height direction of the vehicle body. As shown in FIGS. 1 to 3B, the trunk lid includes a trunk outer panel 10 and a trunk inner panel 20. The lower end of the trunk outer panel 10 is usually connected to the trunk inner panel 20 through a horizontal reinforcing panel 30 to enhance the strength of the trunk lid. The trunk trim 40 is fixedly installed on the trunk inner panel 20 only in the direction toward the front of the vehicle, resulting in that the trunk trim 40 only contacts and abuts against the trunk outer panel 10 in the height direction of the vehicle body. According to the structure of the trunk lid assembly shown in FIGS. 1 to 3, during the use of the trunk lid, a larger gap G will occur between the trunk trim 40 and the trunk outer panel 10, which will affect strength requirements and appearance requirements of the trunk lid.

### SUMMARY

### (1) Technical problems to be solved

An objective of the present application is to provide a trunk lid assembly for a vehicle that may effectively improve the gap between the trunk trim and the trunk outer panel in the height direction of the vehicle body, so as to solve the problem in the prior art that the trunk trim is installed on the trunk inner panel only in the direction toward the front of the vehicle and only contacts with and abuts against the trunk outer panel in the height direction of the vehicle body, resulting in a larger gap during its use, which affects the strength and appearance of the trunk lid.

### Technical solutions

In order to solve the above-mentioned technical problems, on the one hand, the present application provides a trunk lid assembly for a vehicle including a trunk lid and a trunk trim, wherein the trunk trim is installed at the lower end of the trunk lid both in a direction toward the front of the vehicle and in a height direction of the vehicle body.

According to an embodiment, the trunk lid includes a trunk inner panel and a trunk outer panel, and a lower end of the trunk outer panel is connected to the trunk inner panel through a reinforcing panel provided substantially horizontally.

According to an embodiment, the trunk trim is installed to the trunk inner panel in the direction toward the front of the vehicle, and is installed to the reinforcing panel in the height direction of the vehicle body.

According to an embodiment, the trunk trim is installed to the trunk inner panel in the direction toward the front of the vehicle by a threaded connection method.

According to an embodiment, the trunk trim is installed to the reinforcing panel in the height direction of the vehicle body by a connecting mechanism.

According to an embodiment, the connecting mechanism includes a first portion fixed to the reinforcing panel and a second portion connected with the trunk trim.

According to an embodiment, the first portion includes a first connecting shaft, and a first blocking block and a second blocking block respectively disposed at an upper end and a lower end of the first connecting shaft; and the reinforcing panel is provided with a connecting hole corresponding to the first blocking block, such that the first blocking block and the second blocking block are respectively blocked at the upper and lower sides of the reinforcing panel by rotating the first connecting shaft by a predetermined angle after the first blocking block passes through the connecting hole, so as to fix the connecting mechanism to the reinforcing panel.

According to an embodiment, the second portion includes a second connecting shaft disposed below the second blocking block and a third blocking block disposed at the lower end of the second connecting shaft, and the trunk trim is provided with a connecting groove corresponding to the second connecting shaft, such that the connecting groove is blocked above the third blocking block after the second connecting shaft is inserted into the connecting groove so as to install the trunk trim to the connecting mechanism.

According to an embodiment, the position where the trunk trim is installed to the reinforcing panel is closer to an outer edge of the vehicle body than the position where the trunk trim in installed to the trunk inner panel.

On the other hand, the present application also provides a vehicle having a trunk lid assembly for a vehicle as described above.

### Beneficial effects

The technical solutions above of the present application has the following advantages.

The trunk lid assembly for a vehicle according to the present application includes a trunk lid and a trunk trim, wherein the trunk trim is installed at the lower end of the trunk lid both in a direction toward the front of the vehicle and in a height direction of the vehicle body. As a result, the trunk trim is not only fixedly mounted on the trunk lid in the direction toward the front of the vehicle, but also fixedly mounted on the trunk lid in the height direction of the vehicle body, thereby ensuring a smaller gap between the trunk trim and the trunk lid in the height direction of the vehicle body, solving the problem in the prior art that the trunk trim is installed only in the direction toward the front of the vehicle and only contacts and abuts against the trunk lid in the height direction of the vehicle body, which results in a large gap between the trunk trim and the trunk lid during use, and thus the strength of the trunk lid assembly is enhanced and the surface quality of the trunk lid assembly is improved.

### BRIEF DESCRIPTION OF THE DRAWINGS

FIG 1 is a structure diagram of a trunk lid assembly for a vehicle according to the prior art;
FIG 2 is a side view of FIG 1;
FIG 3A is a schematic cross-sectional view taken along A-A in FIG 1;
FIG 3B is a schematic diagram of a larger gap occurring between the trunk trim and the trunk outer panel in the height direction of the vehicle body at the cross section along the A-A in FIG 1;
FIGS. 4A to 4D are structure diagrams of a trunk lid assembly for a vehicle according to the present application;
FIGS. 5A and 5B are schematic diagrams of an assembly process of the trunk lid assembly according to the present application;
FIGS. 6A-6D are structure diagrams of a connecting mechanism according to the present application;

Reference Numerals: 10 trunk outer panel; 20 trunk inner panel; 30 reinforcing panel; 40 trunk trim; 41 visible trim strip; 42 installing structure; 43 connecting groove; 50: threaded connection; 50-1 first threaded connection; 50-2 second threaded connection; 50-3 third threaded connection; 50-4 fourth threaded connection; 51 threaded connection shaft; 52 nut; 60 connecting mechanism; 60-1 first connecting mechanism; 60-2 second connecting mechanism; 61 first connecting shaft; 62 second connecting shaft; 63 first baffle; 64 second baffle; 65 third baffle; 66 seal; G: gap.

### DETAILED DESCRIPTION

In order to make the objectives, technical solutions and advantages of the embodiments of the present application more clear, the technical solutions in the embodiments of the present application are clearly and completely described below in conjunction with the accompanying drawings in the embodiments of the present application. Obviously, these embodiments described are a part of the embodiments of the present application, rather than all of the embodiments. All other embodiments obtained by a person of ordinary skill in the art based on the embodiments of the present application without any creative work belong to the protection scope of the present application.

An embodiment of the present application provides a trunk lid assembly for a vehicle, including a trunk lid and a trunk trim, wherein the trunk trim is installed at a lower end of the trunk lid both in a direction toward the front of the vehicle and in a height direction of the vehicle body.

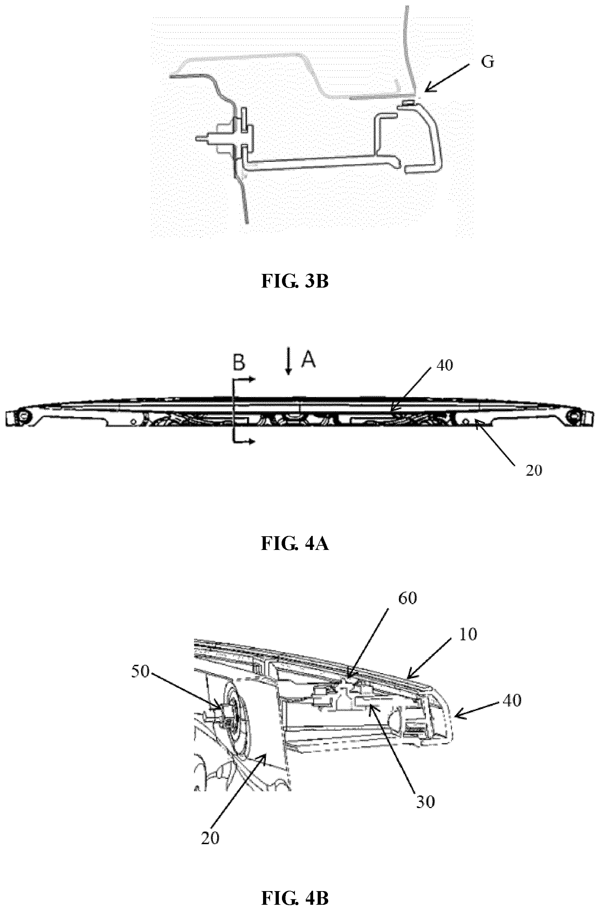

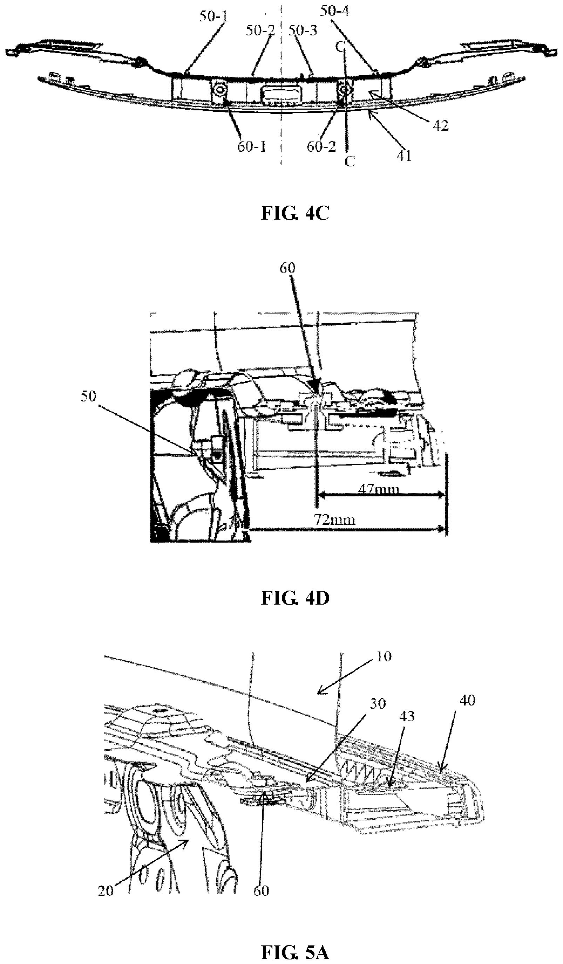

FIG 4A is a structure diagram of a trunk lid assembly for a vehicle according to the present application; FIG 4B is a view along B-B in FIG 4A; FIG 4C is a view along the direction A in FIG 4A; and FIG 4D is a view along C-C in FIG 4C.

Referring to FIGS. 4A to 4D, the trunk lid comprises a trunk outer panel 10 and a trunk inner panel 20. In order to facilitate the user to open and close the trunk lid, in the tail area of the trunk, there is a space between the trunk outer panel 10 and the trunk inner panel 20 to form a force point that protrudes to the user and is convenient for the user to apply force. Therefore, in order to further enhance the strength of the trunk lid, the lower end of the trunk outer panel 10 is connected to the trunk inner panel 20 through a reinforcing panel 30 provided substantially horizontally.

The trunk trim 40 is disposed below the trunk outer panel 10, and usually has a visible trim strip 41 parallel to the outer periphery of the trunk outer panel 10 and located below the trunk outer panel 10, and an installing structure 42 perpendicular to the visible trim strip 41 and extending in the direction toward the front of the vehicle. In other words, the installing structure 42 is located in parallel below the reinforcing panel 30 and extends toward the front of the vehicle until it contacts the trunk inner panel 20 and is mounted on the trunk inner panel 20 through a threaded connection 50. Specifically, the end of the installing structure 42 in contact with the trunk inner panel 20 is provided with a threaded connection shaft 51 that protrudes toward the trunk inner panel 20 and has an external thread, and the trunk inner panel 20 is provided with a hole corresponding to the threaded connection shaft at a corresponding position. The threaded connection shaft passes through the hole and is fixed by a nut 52 with an internal thread coupled with the external thread on the threaded connection shaft, so that the trunk trim 40 is installed on the trunk inner panel 20 in the direction toward the front of the vehicle, that is, trunk trim 40 is installed at the lower end of the trunk lid in the direction toward the front of the vehicle. In addition, the installing structure 42 and the trunk inner panel 20 can be connected by other conventional installation methods in the art.

According to the embodiments of the present application, the installing structure 42 may be installed to the trunk inner panel 20 through a plurality of threaded connections 50. Alternatively, the number of the threaded connections is 4, which include respectively a first threaded connection 50-1, a second threaded connection 50-2, a third threaded connection 50-3, and a fourth threaded connection 50-4, and symmetrically and evenly distributed with the longitudinal axis of the vehicle body as a central axis, so as to evenly fix the trunk trim in the width direction of the vehicle body and enhance the connection strength between the trunk trim and the trunk lid. In addition, the number and distribution of threaded connections in this application are not limited to this.

According to the embodiments of the present application, the trunk trim 40 is located in parallel below the reinforcing panel 30 and is installed to the reinforcing panel 30 in the height direction of the vehicle body through the connecting mechanism 60. Specifically, the installing structure 42 of the trunk trim 40 is installed to the reinforcing panel 30 through the connecting mechanism 60. In other words, through the connecting mechanism 60, the reinforcing panel 30 provides the installing structure 42 with an upward supporting force relative to the height direction of the vehicle body, so as to ensure a smaller gap between the installing structure 42 and the reinforcing panel 30 in the height direction of the vehicle body. That is to say, from the appearance of the trunk lid assembly, it ensures that a smaller gap between the visible trim 41 of the trunk trim 40 and the trunk outer panel 10 in the height direction of the vehicle body and thus the strength and appearance quality of the trunk lid assembly are improved.

According to the embodiments of the present application, the trunk trim 40 is installed to the reinforcing panel 30 through a plurality of connecting mechanisms 60. Alternatively, the trunk trim 40 is installed to the reinforcing panel 30 through two connecting mechanisms 60. The two connecting mechanisms 60 are a first connecting mechanism 60-1 and a second connecting mechanism 60-2, respectively. The first connecting mechanism 60-1 and the second connecting mechanism 60-2 are symmetrically distributed with the longitudinal axis of the vehicle body as a central axis. Alternatively, the first connecting mechanism 60-1 is located on the central axis of the first threaded connection 50-1 and the second threaded connection 50-2, and the second connecting mechanism 60-2 is located on the central axis of the third threaded connection 50-3 and the fourth threaded connection 50-4. In addition, the number and distribution of the connection mechanisms 60 of the present application are not limited to this.

In the length direction of the vehicle body, the connecting mechanism 60 is located between the threaded connection 50 and the visible trim strip 41, that is, the connecting mechanism 60 is closer to the visible trim strip 41 than the threaded connection 50. In other words, the connecting mechanism 60 is closer to an outer edge of the trunk trim, that is, closer to the visible trim strip 41 than the threaded connection 50. As shown in FIGS. 4C and 4D, the distance between the threaded connection 50 and the outer edge of the trunk trim is 72 mm while the distance between the connecting mechanism 60 and the outer edge of the trunk trim is 47 mm or very small. As a result, the installing point where the trunk trim 40 is installed to the reinforcing panel 30 in the height direction of the vehicle body through the connection mechanism 60 is closer to the outer edge of the trunk trim 40 than the installing point where the trunk trim 40 in installed to the trunk inner panel 20 in the direction toward the front of the vehicle. In this way, in the height direction of the vehicle body, a more favorable upward support force may be provided for the trunk trim 40, ensuring a smaller gap G meeting the quality requirements between the outer edge of the trunk trim 40 and the trunk outer panel 10. In addition, the distance between the connecting mechanism 60 and the outer edge of the trunk trim 40 in the present application is not limited to this.

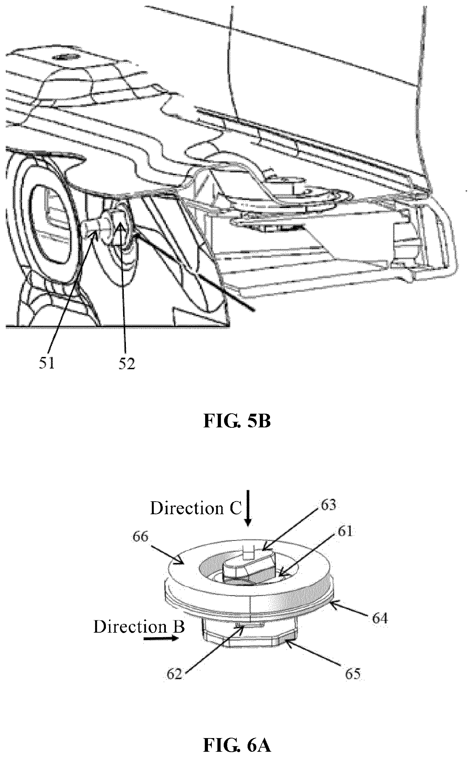

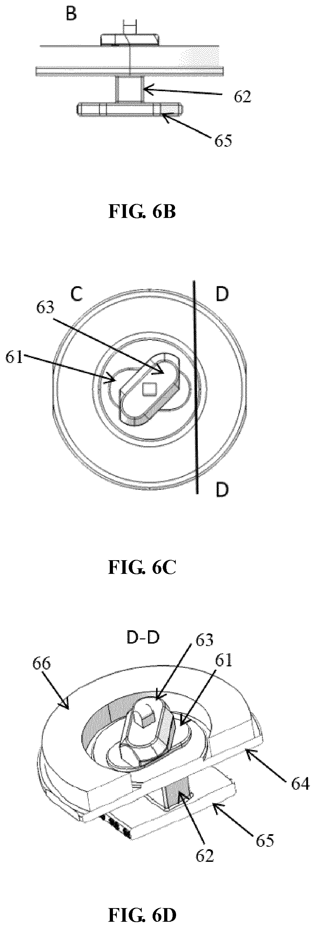

FIG 6A is a structure diagram of the connecting mechanism 60 according to the present application; FIG 6B is a view along the direction B in FIG 6A; FIG 6C is a view along the direction C in FIG 6A; FIG 6D is a schematic sectional view along the D-D in FIG 6C. According to the embodiments of the present application, the connecting mechanism 60 includes a first portion connected with the reinforcing panel 30 and a second portion connected with the trunk trim 40. The first portion and the second portion are integrally formed. With the integrally formed first portion and second portion, the trunk trim 40 may be installed to the reinforcing panel 30 in the height direction of the vehicle body, that is, the installing structure 42 of the trunk trim 40 may be installed to the reinforcing panel 30.

According to the embodiments of the present application, the first portion includes a first connecting shaft 61, and a first blocking block 63 and a second blocking block 64 respectively disposed at an upper end and a lower end of the first connecting shaft 61; and the reinforcing panel 30 is provided with a connecting hole (not shown) corresponding to the first blocking block 63. The first blocking block 63 may pass through the connecting hole upward from the lower side of the reinforcing panel 30, the first connecting shaft 61 is located in the connecting hole, the first blocking block 63 and the second blocking block 64 are respectively located at an upper end and a lower end of the connecting hole, then the first blocking block 63 is rotated so that the first blocking block 63 is blocked at the upper side of the reinforcing panel 30 around the connecting hole, and the second blocking block 64 is blocked at the lower side of the reinforcing panel 30 around the connecting hole, thereby fixing the first portion on the reinforcing panel 30.

According to the embodiments of the present application, the first connecting shaft 61, the first blocking block 63 and the second blocking block 64 are integrally formed. After the first blocking block 64 passes through the connecting hole upward from the lower side of the connecting hole, the first portion may be rotated.

According to the embodiments of the present application, the first blocking block 63 matches the shape of the connecting hole, so that the first blocking block passes through the connecting hole at a certain angle, and may be blocked outside the connecting hole after being rotated by a predetermined angle, that is, the first blocking block 63 cannot go down through the connecting hole. Moreover, the shape of the second blocking block 64 is configured such that after the first blocking block 63 is rotated by a predetermined angle, the second blocking block 64 may be blocked outside the connecting hole, that is, the second blocking block 64 cannot go up through the connecting hole. In other words, the first blocking block 63 and the second blocking block 64 are respectively blocked at the upper and lower sides of the reinforcing panel 30.

According to the embodiments of the present application, the connecting hole may be an ellipse, rectangle, or other shapes with unequal spaces between the relative points of the boundary. The first blocking block 63 may have a cross section of the same size and shape as the connecting hole. When the first portion is rotated by a certain angle, the first blocking block 63 may go up through the connecting hole from the lower side. Since the spaces between the relative points of the boundary of the first blocking block 63 are unequal, the boundary of the first blocking block 63 with a larger space will be blocked outside the boundary of the connecting hole with a smaller space as the first blocking block 63 is rotated by a predetermined angle, so that the first blocking block 63 is blocked above the reinforcing panel 30. The first connecting shaft 61 may have the same shape as the connecting hole and a slightly smaller cross section than the connecting hole, so that the first connecting shaft 61 may penetrate into and be located in the connecting hole when the first blocking block 63 is blocked above the reinforcing panel 30 as it is rotated by a predetermined angle. The second blocking block 64 has a circular shape, a square shape, or any other shape that may be blocked outside the connecting hole. In addition, the shape of the second blocking block 64 is not limited to the shape shown in the embodiments of the present application.

According to the embodiments of the present application, the second portion includes a second connecting shaft 62 disposed below the second blocking block 64 and a third blocking block 65 disposed at the lower end of the second connecting shaft 62. The trunk trim 40 is provided with a connecting groove 43 corresponding to the second connecting shaft 62, and the third blocking block 65 has a size larger than the connecting groove 43, such that the connecting groove 43 may be blocked above the third blocking block 65 after the second connecting shaft 62 is inserted into the connecting groove 43 so as to install the trunk trim 40 to the connecting mechanism 60. Alternatively, the second connecting shaft 62 and the third blocking block 65 are integrally formed.

According to the embodiments of the present application, the connecting groove 43 has an opening toward the front of the vehicle, so that the trunk trim 40 may be slide from the opening position of the connecting groove 43 toward the front of the vehicle, the second connecting shaft 62 is inserted into the connecting groove 43, the third blocking block located at the lower end of the second connecting shaft 62 supports the connecting groove 43 upward in the height direction of the vehicle body, that is, supports the trunk trim 40, and the second connecting shaft 62 may restrict the position of the connecting groove 43 in other direction except for the opening direction of the connecting groove 43, i.e., except for the direction toward the front of the vehicle. According to the embodiments of the present application, the second connecting shaft 62 may have a cross section of any other shape such as a circle, a square and the like, and the third blocking block 65 may have a cross section of any other shape such as a circle, a square and the like. In addition, the cross-sections of the second connecting shaft 62 and the third blocking block 65 are not limited to the shapes illustrated in the embodiments of the present application.

A seal 66 is disposed between the second blocking plate 64 and the reinforcing panel 30 so as to reduce the friction between the second blocking plate 64 and the reinforcing panel 30 when the trunk trim is installed in the direction toward the front of the vehicle. Alternatively, the seal is made of foam material and is fixed on the second blocking plate 64 by an adhesive. When the first blocking plate 63 goes up through the connection hole from the lower side, the seal 66 may be extruded between the second blocking plate 64 and the reinforcing panel 30.

FIGS. 5A and 5B are assembly diagrams of the trunk lid assembly for a vehicle according to the present application, that is, installation schematic diagrams of assembling the trunk trim to the trunk lid.

The connecting mechanism 60 is first installed on the reinforcing panel 30, and the trunk trim 40 is then installed at the lower end of the trunk outer panel in the direction toward the front of the vehicle, so that the installing structure 42 of the trunk trim 40 is abutted against the trunk inner panel 20 and the visible trim strip 41 of the trunk trim 40 is parallel to the outer periphery of the trunk outer panel and is located below the trunk outer panel. The second connecting shaft 62 of the connecting mechanism 60 may be inserted into the connecting groove 43 from the opening direction of the connecting groove 43, and the third blocking block 65 is located below the connecting groove 43 to provide upward supporting force. The threaded connection shaft 51 of the trunk trim 40 is inserted into the corresponding hole on the trunk inner panel 20 and then fixed by the nut 52 to complete the assembly of the trunk lid assembly.

Another aspect of the present application also provides a vehicle including the trunk lid assembly for a vehicle mentioned above.

In summary, the present application provides a trunk lid assembly for a vehicle including a trunk lid and a trunk trim, wherein the trunk trim is installed at the lower end of the trunk lid both in a direction toward the front of the vehicle and in a height direction of the vehicle body. As a result, the trunk trim is not only fixedly mounted on the trunk lid in the direction toward the front of the vehicle, but also fixedly mounted on the trunk lid in the height direction of the vehicle body, thereby ensuring a smaller gap between the trunk trim and the trunk lid in the height direction of the vehicle body, solving the problem in the prior art that the trunk trim is installed only in the direction toward the front of the vehicle and only contacts and abuts against the trunk lid in the height direction of the vehicle body, which results in a large gap occurring between the trunk trim and the trunk lid during use, and thus the strength of the trunk lid assembly is enhanced and the surface quality of the trunk lid assembly is improved.

Finally, it should be noted that the above embodiments are only used to explain the technical solutions of the present application, and are not limited thereto; although the present application is described in detail with reference to the foregoing embodiments, it should be understood by those skilled in the art that they can still modify the technical solutions described in the foregoing embodiments and make equivalent replacements to a part of the technical features, and these modifications and substitutions do not make the essence of the corresponding technical solutions depart from the spirit and scope of the technical solutions of the embodiments of the present application.

## Claims

1. A trunk lid assembly for a vehicle, **characterized by** comprising a trunk lid and a trunk trim, wherein the trunk trim (40) is installed at a lower end of the trunk lid both in a direction toward the front of the vehicle and in a height direction of the vehicle body.

2. The trunk lid assembly for a vehicle of claim 1, **characterized in that**, the trunk lid comprises a trunk inner panel (20) and a trunk outer panel (10), and a lower end of the trunk outer panel (10) is connected to the trunk inner panel (20) through a reinforcing panel provided substantially horizontally.

3. The trunk lid assembly for a vehicle of claim 2, **characterized in that**, the trunk trim (40) is installed to the trunk inner panel (20) in the direction toward the front of the vehicle, and is installed to the reinforcing panel (30) in the height direction of the vehicle body.

4. The trunk lid assembly for a vehicle of claim 3, **characterized in that**, the trunk trim (40) is installed to the trunk inner panel (20) in the direction toward the front of the vehicle by a threaded connection (50).

5. The trunk lid assembly for a vehicle of claim 4, **characterized in that**, the trunk trim (40) is installed to the reinforcing panel (30) in the height direction of the vehicle body by a connecting mechanism (60).

6. The trunk lid assembly for a vehicle of claim 5, **characterized in that**, the connecting mechanism (60) comprises a first portion fixed to the reinforcing panel (30) and a second portion connected with the trunk trim (40).

7. The trunk lid assembly for a vehicle of claim 6, **characterized in that**, the first portion comprises a first connecting shaft and a first blocking block and a second blocking block respectively disposed at an upper end and a lower end of the first connecting shaft, and the reinforcing panel (30) is provided with a connecting hole corresponding to the first blocking block, such that the first blocking block and the second blocking block are respectively blocked at the upper and lower sides of the reinforcing panel (30) by rotating the first connecting shaft by a predetermined angle after the first blocking block passes through the connecting hole, so as to fix the connecting mechanism (60) to the reinforcing panel (30).

8. The trunk lid assembly for a vehicle of claim 7, **characterized in that**, the second portion comprises a second connecting shaft disposed below the second blocking block and a third blocking block disposed at a lower end of the second connecting shaft, and the trunk trim (40) is provided with a connecting groove (43) corresponding to the second connecting shaft, such that the connecting groove (43) is blocked above the third blocking block after the second connecting shaft is inserted into the connecting groove (43), so as to install the trunk trim (40) to the connecting mechanism (60).

9. The trunk lid assembly for a vehicle of claim 1, **characterized in that**, the position where the trunk trim (40) is installed to the reinforcing panel (30) is closer to an outer edge of the vehicle body than the position where the trunk trim (40) in installed to the trunk inner panel (20).

10. A vehicle, **characterized by** comprising the trunk lid assembly for a vehicle of any one of claims 1-9.
